Europäisches Patentamt

(19) European Patent Office

Office européen des brevets

(11) Numéro de publication: **0 228 315**
**B1**

## (12) FASCICULE DE BREVET EUROPEEN

(45) Date de publication du fascicule du brevet:
06.06.90

(51) Int. Cl.⁵: **G01C 19/64**, G02B 6/28

(21) Numéro de dépôt: **86402461.7**

(22) Date de dépôt: **04.11.86**

(54) Dispositif interferométrique en anneau réciproque à fibre optique monomode.

(30) Priorité: **08.11.85 FR 8516600**

(43) Date de publication de la demande:
**08.07.87 Bulletin 87/28**

(45) Mention de la délivrance du brevet:
**06.06.90 Bulletin 90/23**

(84) Etats contractants désignés:
**DE GB IT NL SE**

(56) Documents cités:
**EP-A- 0 031 274**
**EP-A- 0 103 467**
**DE-A- 2 841 133**
**US-A- 4 387 954**
**US-A- 4 392 712**

**OPTICS LETTERS,**
**vol. 9, no. 12, décembre 1984, pages 570-572, Optical**
**Society of America, New York, US; W.K. BURNS et al.:**
**"All-fiber gyroscope with polarization-holding fiber"**

(73) Titulaire: **THOMSON-CSF, 51, Esplanade du Général de Gaulle, F-92800 Puteaux(FR)**

(72) Inventeur: **Lefevre, Hervé, THOMSON-CSF SCPI 19, avenue de Messine, F-75008 Paris(FR)**
Inventeur: **Enard, Alain, THOMSON-CSF SCPI 19, avenue de Messine, F-75008 Paris(FR)**

(74) Mandataire: **Lepercque, Jean et al, THOMSON-CSF SCPI, F-92045 PARIS LA DEFENSE CEDEX 67(FR)**

## Description

La présente invention concerne un dispositif interféromètrique réciproque en anneau à fibre monomode.

Dans un interféromètre en anneau, ou interféromètre de SAGNAC, deux faisceaux parcourent en sens opposés un même trajet optique et interfèrent à la sortie de ce trajet. Pour autant qu'une perturbation de ce trajet présente les mêmes caractéristiques pour les deux sens de propagation et ne varie pas pendant la durée du transit de la lumière dans l'interféromètre, les deux faisceaux sont affectés identiquement et leur phase relative demeure inchangée. Les perturbations de ce type sont dites "réciproques". Parce que le temps de transit dans un interféromètre est généralement très petit, les variations d'une perturbation pendant ce temps, sauf si celle-ci est introduite volontairement, sont généralement négligeables.

Mais il existe des perturbations "non réciproques" qui présentent une amplitude différente aux deux sens de propagation, il s'agit d'effets physiques qui, en établissant son orientation complète, détruisent la symétrie de l'espace ou du milieu.

Deux effets connus présentent cette propriété :
- l'effet Faraday, ou effet magnéto-optique colinéaire, par lequel où un champ magnétique crée une orientation préférentielle du spin des électrons du matériau optique ;
- et l'effet Sagnac, par lequel effet inertiel relativiste, où la rotation de l'interféromètre par rapport à un repère gallinéen détruit la symétrie des temps de propagation.

L'utilisation de la rotation par rapport à l'espace inertiel conduit à la réalisation de gyromètres à fibre optique et l'utilisation du champ magnétique conduit à la réalisation de capteurs de courant ampèremétriques ou de magnétomètres.

Il a été montré que l'utilisation d'une configuration particulière, dite réciproque, permet d'annuler exactement tout déphasage autre que ceux induits par les effets non réciproques.

Une telle configuration est décrite, par exemple, dans la demande de brevet EP-A 0 031 274 au nom de la demanderesse. Il s'agit d'un interféromètre en anneau comprenant: un anneau constitué d'une fibre monomode; des moyens d'émission d'énergie lumineuse cohérente, des moyens de séparation et de mélange pour diriger, simultanément et par parties égales, l'énergie lumineuse cohérente vers les deux extrémités de l'anneau de fibre optique, et pour recombiner les rayonnements émergeant des deux extrémités de l'anneau; et un filtre monomode disposé entre les moyens de séparation et de mélange, et les moyens d'émission, et constituant une porte d'entrée monomode.

Pour détecter la lumière revenant par la porte d'entrée monomode de l'interféromètre, cette configuration nécessite des moyens dérivateurs renvoyant sur un détecteur une partie de la lumière sortant des moyens de séparation et de mélange.

L'interféromètre décrit dans la demande de brevet EP-A 0 031 274 comporte des moyens dérivateurs constitués de deux lentilles et d'une lame semi-réfléchissante, qui ne permettent pas d'obtenir sur le détecteur un signal optimum, et qui sont encombrants.

En plus de l'utilisation de composants optiques classiques, il a été proposé l'utilisation de composants en optique guidée: optique intégrée ou tout-fibre.

Le document OPTICS LETTERS, vol. 9, n° 12, décembre 1984, pages 570–572 décrit un gyroscope qui comporte un anneau de fibre optique conservant la polarisation, un segment d'entrée-sortie constitué de fibre polarisante, des moyens de mélange et de séparation, et des moyens dérivateurs constitués de deux coupleurs optiques constitués chacun de deux fibres parallèles et fusionnées. Les deux coupleurs ne jouent pas un rôle équivalent. Celui qui constitue les moyens de séparation et de mélange doit avoir au moins trois portes monomodes pour pouvoir être couplé efficacement au segment d'entrée-sortie, et aux deux extrémités de l'anneau. Celui qui constitue les moyens dérivateurs n'a besoin que de deux portes monomodes, une pour les moyens d'émission, et une pour le segment d'entrée-sortie. La porte débouchant sur le détecteur n'a pas besoin d'être monomode, sans pour autant que l'interféromètre cesse d'être monomode. Il est donc possible de simplifier l'architecture d'un interféromètre en anneau réciproque.

D'autre part, la répartition de l'énergie lumineuse traversant le coupleur, n'est pas optimale. Il y a des pertes car une extrémité de l'une des fibres constituant le coupleur n'est pas utilisée. Le signal reçu par le détecteur n'est donc pas optimum.

Le but de l'invention est de proposer un dispositif simple dans lequel le signal reçu par le détecteur est optimum. L'objet de l'invention comporte essentiellement des moyens dérivateurs générant des pertes directives dérivant 50% de l'énergie émergeant des deux extrémités de l'anneau, ce qui correspond aux conditions de fonctionnement de l'anneau pour lesquelles le signal reçu par le détecteur est optimum.

L'invention a donc pour objet un dispositif interféromètre en anneau comprenant: un anneau de fibre optique monomode, des moyens d'émission d'énergie lumineuse cohérente d'une longueur d'onde déterminée, des moyens de séparation et de mélange du rayonnement pour diriger, simultanément et par parties égales, l'énergie lumineuse cohérente émise vers les deux extrémités de l'anneau et pour recombiner les rayonnements émergeant des deux extrémités de l'anneau; et un segment de fibre optique monomode comprenant un cœur et une gaine, formant un filtre de mode et disposé entre les moyens de séparation et de mélange, et les moyens d'émission d'énergie lumineuse, caractérisé en ce que ledit segment de fibre monomode est muni de moyens dérivateurs générant des pertes directives créant un faisceau s'échappant de ladite fibre optique suivant une direction de propagation moyenne déterminée et ayant une puissance égale à la moitié de la puissance de rayonnement émergeant des deux extrémités de l'anneau; et en ce qu'il comprend un organe opto-électronique de détection dudit faisceau.

L'invention sera mieux comprise et d'autres caractéristiques et avantages apparaîtront à l'aide de la description qui suit en référence aux figures annexées et parmi lesquelles:

– la figure 1 illustre schématiquement un interféromètre de l'Art Connu;
– les figures 2 et 3 illustrent schématiquement un interféromètre selon l'invention;
– la figure 4 illustre une première variante de réalisation du dispositif selon l'invention;
– les figures 5 à 10 illustrent une seconde variante de l'invention selon deux modes d'exécution;
– la figure 11 illustre une troisième variante de réalisation selon l'invention.

Il paraît tout d'abord utile de rappeler les principales dispositions retenues pour rendre un interféromètre strictement réciproque.

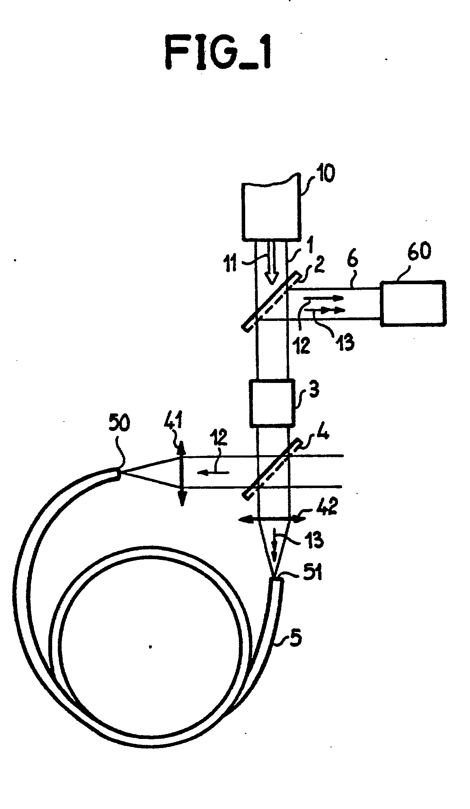

La figure 1 illustre schématiquement un exemple d'architecture d'interféromètre en anneau réciproque selon l'Art Connu.

Sur cette figure 1 est représenté un interféromètre en anneau dont l'anneau est réalisé en fibre optique monomode 5, mais dont le cœur est constitué d'éléments optiques traditionnels. L'addition d'un filtre de mode 3 rend un tel interféromètre strictement réciproque.

Le faisceau incident 11 produit par une source laser traverse un filtre de mode 3 et se sépare en deux sur une lame semi-transparente 4. Une partie 12 du faisceau est envoyée dans la fibre optique par l'intermédiaire d'une lentille 41 qui le focalise sur l'entrée 50 de la fibre optique 5, tandis que l'autre partie 13 du faisceau est envoyée sur cette même fibre optique 5 par l'intermédiaire d'une lentille 42 qui le focalise sur l'entrée 51 de cette fibre optique 5. Les deux faisceaux parcourent la fibre en sens inverse et sont repris dans le bras de l'interféromètre par la lame semi-transparente 4. Ils retraversent le filtre de mode 3 et sont séparés du faisceau incident par une lame semi-transparente 2 qui les envoie en partie dans un bras de sortie 6 dans lequel on détecte le signal d'interférence, à l'aide d'un photodétecteur 60.

L'utilisation d'une fibre optique monomode 5 comme chemin optique permet d'augmenter très fortement la longueur de ce chemin optique. En effet, la fibre optique est habituellement enroulée pour former une bobine multispire. On réalise ainsi, par exemple, des gyroscopes très sensibles.

Il a été proposé de remplacer les éléments discrets par des éléments optiques intégrés ce qui permet d'améliorer le bilan énergétique.

On peut également remplacer le filtre de mode 3 par un élément d'optique intégrée ou plus simplement par une fibre optique monomode. En effet, une fibre optique monomode de quelques décimètres forme un filtre de mode quasi parfait.

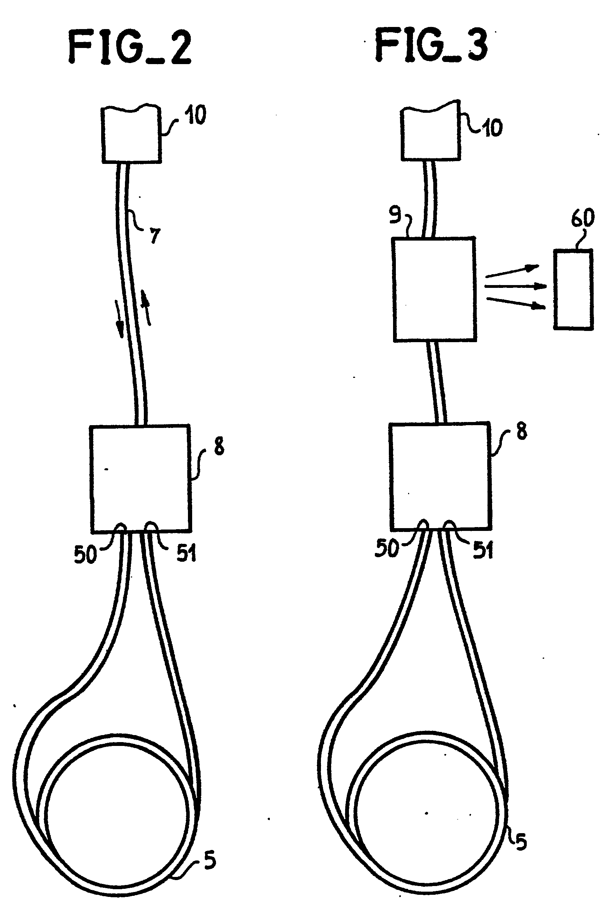

La configuration théorique d'un interféromètre simplifié de ce type est représenté schématiquement sur la figure 2.

Sur cette figure, on a omis volontairement les moyens d'extraction de la lumière recombinée et de détection de cette lumière.

L'anneau, constitué d'une fibre optique monomode 5, est couplé par ses deux extrémités à un circuit d'optique intégré assurant les fonctions de séparation et de recombinaison de la lumière.

Ce circuit est couplé optiquement à la source 10 par un tronçon de fibre optique monomode 7 qui joue également le rôle du filtre de mode 3 de la figure 1.

Ce dispositif est strictement monomode mais ne peut fonctionner en l'état car il faut extraire une partie de l'onde retour et la détecter.

Pour ce faire, comme représenté sur la figure 3, il est inséré entre le circuit 8 et la source 10, un dérivateur 3 dB. Ce dérivateur porte la référence 9 sur la figure 3. Il est couplé à la source 10 par un premier tronçon 70 de fibre monomode et au circuit 8 par un second tronçon 71 de fibre monomode. En outre, il est couplé optiquement à un organe opto-électronique de détection 60.

Conformément à l'invention, seules les couplages entre, d'une part la source 10 et le dérivateur 9 et, d'autre part, entre le dérivateur et le circuit 8 sont du type monomode. Le couplage optique entre le dérivateur 9 et l'organe opto-électronique 60 peut être simplifié.

La structure de ce dérivateur 9 est susceptible de plusieurs variantes de réalisation.

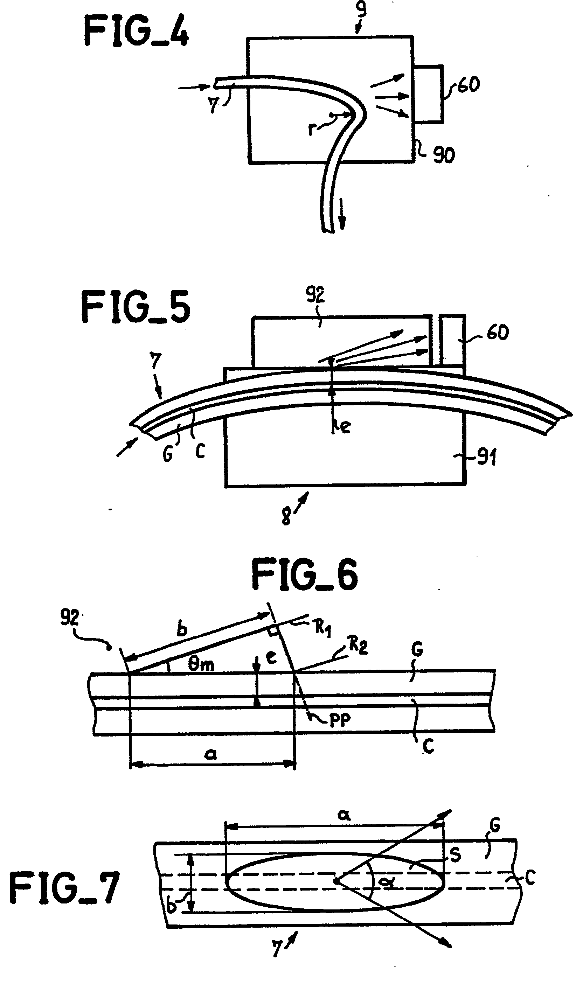

Selon une première variante de réalisation, représentée sur la figure 4, le dérivateur est constitué par une fibre optique monomode dans laquelle on introduit une microcourbure. Dans cette variante, comme dans le cas du dispositif de la figure 2, il n'y a en réalité qu'une fibre unique de couplage entre la source 10 et le circuit 8. En un endroit de cette fibre optique 7, on introduit une micro-courbure.

En réglant le rayon de courbure r et en fixant le tronçon de fibre optique courbe dans un support 90, on obtient des pertes directives qui peuvent être ajustées à 50%. On peut procéder par essais successifs et mesures.

L'onde incidente, en provenance du circuit 8, est donc transmise en une onde transmise à hauteur de 50% de l'énergie incidente. L'énergie restante s'échappe de la fibre optique 7 et est transmise vers le détecteur 60.

La fibre optique 7 est noyée dans un milieu d'indice supérieur à la gaine dont elle est munie. Il peut s'agir de liquide, contenu dans un boîtier plastique, ou de colle polymérisable par exposition à un rayonnement ultraviolet, transparente aux longueurs d'ondes utilisées.

A titre d'exemple, pour une longueur d'onde de 0,8 micromètre et une fibre monomode de section de coeur de 5 micromètres, le rayon de courbure r nécessaire est de l'ordre de 1 mm.

Selon une seconde variante, on courbe légèrement la fibre optique monomode 7 et on procède à une érosion superficielle et un poli de cette fibre optique. Cette attaque ne concerne que la gaine optique G. On fixe la fibre optique 7 donc un bloc support 91.

On place alors au-dessus de cette zone polie un bloc 92 parallélépipédique rectangle de matériau d'indice supérieur à celui du coeur C, par exemple du verre si la fibre optique est en silice. Le méplat du poli affleure sur une des faces du bloc 91, sur la face supérieure dans l'exemple illustré.

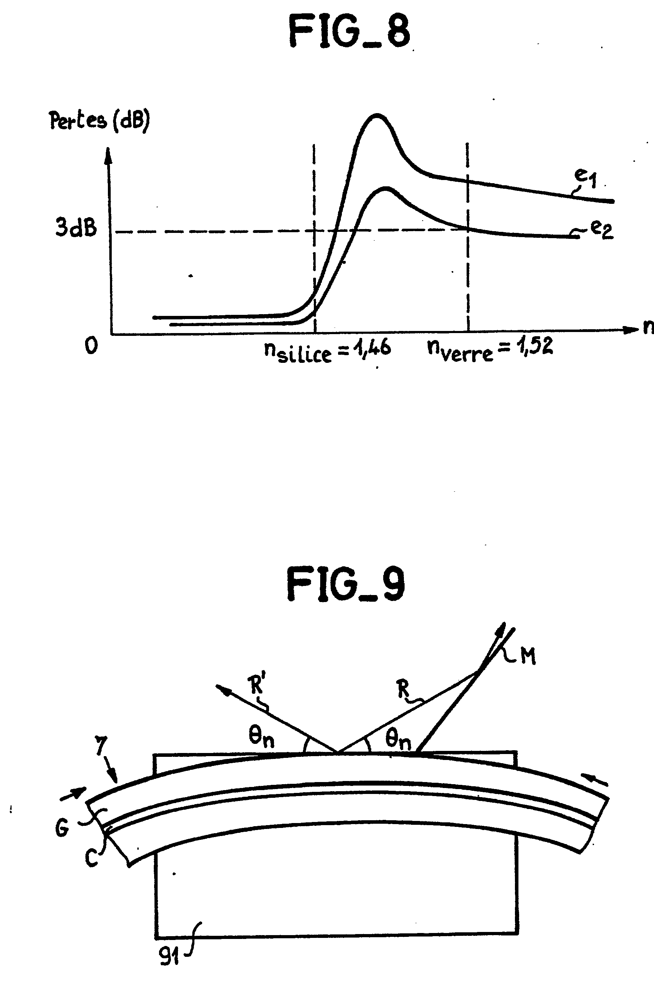

Il se produit alors des pertes qui sont recueillies par un organe optoélectronique de détection 60 placé contre une des faces du bloc 92. Sur la figure 5, la lumière étant supposée se propager de gauche à droite, le photodétecteur 60 est placé sur la droite du bloc 92.

Le support 91 est, par exemple, en colle polymérisable sur la face supérieure duquel est placé l'ensemble bloc 92 et photodétecteur 60.

L'importance des pertes dépend de l'épaisseur e de gaine restant entre la face intérieure du bloc 92 et le coeur C de la fibre optique monomode 7.

Les pertes obtenues sont directives.

Un autre avantage est que l'angle moyen sous lequel s'échappe la fraction de lumière dûe aux pertes directives est relativement important.

Ce phénomène va être explicité en relation avec la figure 6.

Si l'on considère deux rayons particuliers $R_1$ et $R_2$, en début et en fin de la zone d'interaction entre le milieu du bloc 92 et la gaine G, zone d'interaction de longueur a, la relation suivante est satisfaite :

$$n_F \times a = n_m \times b \quad (1)$$

dans laquelle :

$n_F$ est l'indice de réfraction de la fibre optique ;

$n_m$ est l'indice de réfraction du milieu du bloc 82 ;

a est la longueur d'interaction ;

b est le chemin optique parcouru par le rayon $R_1$ entre sa sortie de la fibre optique et le plan de phase PP passant par le point de sortie du rayon $R_2$.

Pour que la condition de phase soit respectée, il faut que la relation suivante soit satisfaite :

$$\text{Cos}\, \theta_m = \frac{b}{a} = \frac{n_F}{n_m} \, 1 \quad (2)$$

$$\text{ou} \quad \theta_m = \text{arc Cos}\, \left(\frac{n_F}{n_m}\right) \quad (3)$$

relation dans laquelle $\theta_m$ est l'angle que fait le rayon $R_1$ avec la surface de la gaine , c'est-à-dire la surface du poli.

Dès que l'on se place en dessous de la valeur 1, l'angle est très vite important.

Pour la silice, $n_F$ est égal à 1,46 et l'angle $\theta_m$ est égal à 16°.

Le dispositif présente également d'autres avantages.

La zone d'interaction peut être relativement longue : pour un rayon de courbure de la fibre optique 7 compris dans la gamme 3 à 10 cm, la zone d'interaction à une longueur (a) de l'ordre de 1 mm. Elle concerne les dimensions longitudinales de la zone.

Par contre, comme illustré sur la figure 7, le polissage de la région superficielle de la fibre optique courbée se traduit par une surface oblongue.

La largeur maximale de la zone d'interaction est égale à b. Pour les valeurs précédemment indiquées de courbure et de longueur a de la zone d'interaction, b est typiquement de l'ordre de quelques micromètres.

Cette zone superficielle polie occasionnant des pertes par interaction avec le milieu du bloc 92 se comporte comme une source d'énergie rayonnante cohérente. Aussi la diffraction est très faible, de l'ordre de $10^{-3}$ rad, dans un plan longitudinal perpendiculaire à la surface de polissage S. Par contre, l'angle $\alpha$ de diffraction dans un plan formant un angle $\theta_m$ avec la surface de polissage est relativement important. L'angle $\alpha$ est typiquement compris dans une gamme de 10 à 20°.

Enfin, comme il a été signalé, il faut que l'indice de réfraction du bloc 82 soit supérieur à celui du coeur C de la fibre optique 7. Cependant, cette condition peut être réalisée avec de nombreux matériaux sans ajustement critique.

En effet, comme illustré par la figure 8 représentant les pertes en dB en fonction de l'indice de réfraction du milieu 82, une fois franchi un pic positionné immédiatement après la valeur de l'indice de réfraction du coeur de la fibre optique, les courbes ne présentent que des variations en pentes douces. Il a été représenté deux courbes pour deux valeurs arbitraires $e_1$ et $e_2$ de l'épaisseur de gaine restante.

Dans l'exemple choisi, on a supposé que le coeur était en silice d'indice égal à 1,46 et le bloc 92 en verre d'indice 1,52.

De façon pratique, on procède à un polissage progressif jusqu'à ce que, pour un matériau du bloc 82 donné, on obtienne des pertes les plus proches possibles de 3dB.

Dans l'exemple illustré, il est supposé que, pour le verre, la valeur de e nécessaire est égale à $e_2$.

Pour fixer les idées, pour une fibre optique de diamètre extérieur égal à 100 micromètres et de diamètre de coeur égal à 5 micromètres, et dans le cadre des valeurs précédemment énoncées, des pertes égales à 3dB sont obtenues pour une valeur de e comprise dans la gamme de 2 à 5 micromètres.

Cette deuxième variante est susceptible d'une amélioration.

En effet, la lumière est guidée dans les deux sens dans la fibre optique 7 : lumière émise par la source et lumière recombinée en sortie de l'anneau. Seule cette dernière présente de l'intérêt et doit être détectée.

Les pertes, par contre, concernent les deux sens de propagation.

On dispose à la place du bloc 92, un élément dont une paroi joue le rôle de miroir et transmet la lumière utile suivant une direction privilégiée.

Cette disposition est illustrée par la figure 9.

Le faisceau représenté sur la figure 9 par rayon unique R′ correspond aux pertes que subit l'onde générée par la source et transmise vers l'anneau. Ce faisceau doit être éliminé ou plus exactement transmis en suivant une direction pour laquelle il n'y a pas de risque d'interférences avec le faisceau utile, représenté également par un rayon unique R. Celui-ci correspond à la lumière recombinée et retransmise vers la source.

Selon la variante illustrée par la figure 9, ce rayon R est réfléchi par une paroi formant miroir M, de sorte que l'on peut disposer le photodétecteur en surplomb de la fibre optique 7.

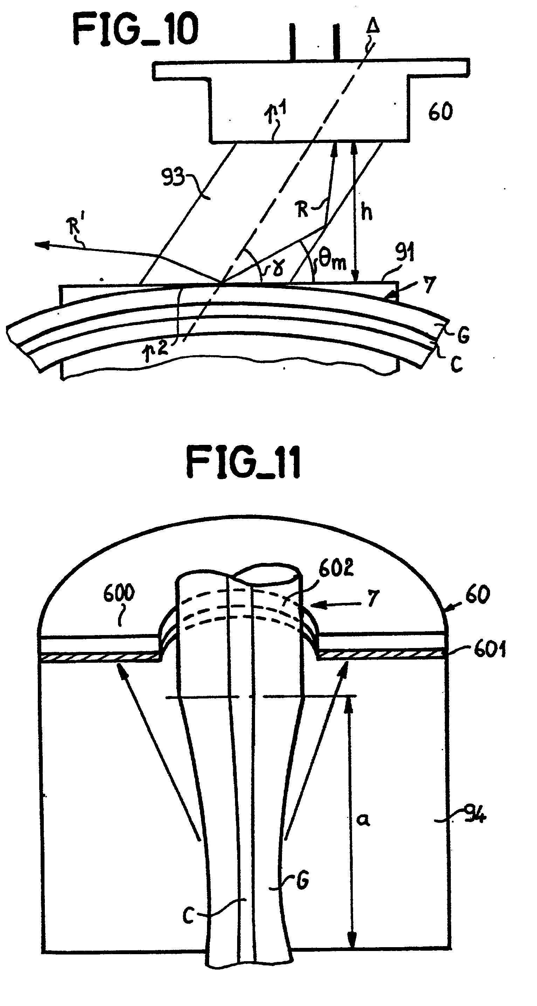

De façon pratique, comme illustré par la figure 10, l'élément à disposer au-dessus de la fibre optique va être constitué d'un segment de cylindre 93. Ce cylindre comporte deux bases planes comprises dans des plans parallèles entre eux $p_1$ et $p_2$, de manière à ce que le plan supérieur $p_2$ ou plan de sortie soit parallèle à la surface du poli effectué sur la fibre optique 7.

Cependant les plans de coupe ne sont pas orthogonaux à l'axe de symétrie $\Delta$ du cylindre.

On peut alors disposer sur le plan supérieur $p_1$ un organe optoélectronique de détection 60. Celui-ci peut prendre la forme d'un boîtier classique de type TO5 par exemple, dont la fenêtre d'entrée de l'élément photodétecteur est couplé optiquement au plan $p_1$.

Le faisceau utile est réfléchi par la paroi du cylindre 93. Comme précédemment, le matériau du cylindre doit avoir un indice de réfraction plus grand que celui du coeur C de la fibre optique 7.

Le faisceau parasite R′ est, par contre, refracté par la paroi du cylindre 93 et transmis suivant une direction pratiquement parallèle au plan de la zone d'interaction.

Si l'on règle de façon judicieuse l'angle $\gamma$ que fait l'axe $\Delta$ du cylindre 93 avec le plan de la surface de la zone d'interaction ainsi que la distance h séparant celle-ci du photodétecteur 60, on peut faire converger le faisceau réfléchi vers une zone centrale de celui-ci.

En effet, outre la fonction miroir, le cylindre 93 joue le rôle de lentille cylindrique. Comme il a été indiqué, l'angle de diffraction est important dans un plan formant un angle $\theta_m$ avec la surface de la zone d'interaction. Le faisceau R est donc un faisceau divergent dans ce plan.

Le cylindre 83 refait converger, après réflexion sur la paroi, le faisceau R et le focalise, si les conditions précédemment énoncées sont satisfaites, en un point situé dans le plan $p_1$ ou proche de ce plan. Plus précisément, le point de focalisation doit être situé sur la surface active de l'élément photodétecteur 60.

Il est à noter que, habituellement, la réflexion sur la paroi du cylindre 93 est quasi-totale et qu'il n'y a pas besoin de métalliser la surface extérieure du cylindre.

De la même manière, l'optique constituée par le barreau cylindrique 93 n'a pas besoin d'être de qualité et qu'enfin le poli effectué sur la gaine optique G n'est pas critique. En effet, si on utilise une colle polymérisable aux ultraviolets pour fixer le barreau de même indice de réfraction que celui du barreau 93, les défauts de polissage sont, de ce fait, fortement atténués. La colle remplit les aspérités subsistantes.

La base du barreau cylindrique 93 doit couvrir toute la surface de la zone polie.

Pour fixer les idées, l'angle $\gamma$ est en général de l'ordre de 60°. La valeur de h est égale à environ les quatre cinquièmes du diamètre de la section droite du cylindre 93. A titre d'exemple, le diamètre est égal à 2 mm et h est égal à 1,5 mm.

Il est à noter que le dispositif qui vient d'être décrit est simple de mise en œuvre et ne présente aucun paramètre critique.

Il faut également noter, qu'un des problèmes rencontrés dans le cadre des applications envisagées, à savoir les applications pour lesquelles un gyromètre est mis en œuvre, est la dérive thermique.

Si l'on se reporte à la courbe illustrée par la figure 8, l'on se place dans une zone stable en température et de toute façon à faible pente.

En outre, l'optimum pour les pertes est de 3dB, ce qui correspond à 50% de lumière captée et 50% de lumière transmise.

On peut constater que cette valeur n'est pas critique car le produit, égal à 0,25 pour 50% − 50%, devient égale à 0,24 pour 40% − 60% ou 60% − 40%.

Là encore l'ajustement des pertes à 50% n'est pas critique.

La figure 11 illustre une troisième variante de réalisation du dispositif selon l'invention.

On effectue un rétrécissement du diamètre de la fibre optique 7. On peut procéder par étirement.

La fibre optique 7 est alors entourée par un manchon 94 en matériau d'indice de réfraction supérieur à celui du cœur C.

Il se produit là encore des pertes directives qui peuvent être captées par un détecteur. Pour ce faire, on enfile sur la fibre optique, au-dessus du manchon 94 dans l'exemple illustré sur la figure 11, un détecteur annulaire 60. Celui-ci comprend un support 600 et une région active 601 recevant le rayonnement s'échappant de la fibre optique 7.

Le détecteur annulaire 60 peut être réalisé simplement en partant d'un photodétecteur classique en forme de disque dans lequel on a réalisé un canal central 602 par toute méthode appropriée de l'Art Connu, par exemple par attaque chimique.

Tous les dispositifs qui viennent d'être décrits présentent l'avantage de la simplicité et présentent également une excellente stabilité thermique. Ils ne font pas intervenir de différences d'indices de réfraction faibles difficiles à ajuster et ne nécessitent pas de positionnement micrométrique.

Ils conservent naturellement la propriété d'être entièrement monomode pour la partie interféromètre proprement dite.

**Revendications**

1. Dispositif interféromètre en anneau comprenant: un anneau de fibre optique monomode (5), des moyens d'émission d'énergie lumineuse cohérente d'une longueur d'onde déterminée (10), des moyens de séparation et de mélange (8) du rayonnement pour diriger, simultanément et par parties égales, l'énergie lumineuse cohérente émise vers les deux extrémités de l'anneau (5) et pour recombiner le rayonnement émergeant des deux extrémités (50, 51) de l'anneau (5); et un segment de fibre optique monomode (7) comprenant un cœur (C) et une gaine (G), formant un filtre de mode et disposé entre les moyens de séparation et de mélange (8) et les moyens d'émission (10) d'énergie lumineuse, caractérisé en ce que ledit segment de fibre monomode (7) est muni de moyens dérivateurs (9) générant des pertes directives créant un faisceau s'échappant dudit segment de fibre optique (7) suivant une direction de propagation moyenne déterminée et ayant une puissance égale à la moitié de la puissance du rayonnement émergeant des deux extrémités de l'anneau (5); et en ce qu'il comprend un organe opto-électronique (60) de détection dudit faisceau.

2. Dispositif selon la revendication 1, caractérisé en ce que lesdits moyens dérivateurs (9) sont constitués par un bloc à faces planes de matériau transparent à la longueur d'onde émise, d'indice de réfraction supérieur à celui du cœur (C) dudit segment de fibre optique (7) formant filtre de mode, et enserrant celle-ci de manière à ce qu'elle présente une microcourbure de rayon déterminée (r), générant lesdites pertes directives; et en ce que l'organe opto-électronique (60) de détection est disposé sur une des faces planes du bloc (90) de manière à capter l'énergie s'échappant dudit segment de fibre optique (7).

3. Dispositif selon la revendication 1, caractérisé en ce que ledit segment de fibre optique (7) est maintenu dans un support (9) et comporte un méplat obtenu par polissage d'une zone superficielle de la gaine (G), de manière à ne laisser subsister qu'une épaisseur de gaine (G) de valeur déterminée (e), le support comportant une face plane sur laquelle affleure ledit méplat, et en ce qu'il comporte un bloc (91) de matériau transparent à la longueur d'onde émise d'indice de réfraction supérieur à celui du cœur (C) dudit segment de fibre optique (7) comprenant une première face plane accolée audit méplat et une seconde face plane sur laquelle est disposé ledit organe optoélectronique de détection (60).

4. Dispositif selon la revendication 3, caractérisé en ce que le bloc 6 est un barreau cylindrique (93) dont l'axe de symétrie (Δ) est incliné d'un angle (γ) déterminé par rapport au plan dudit méplat de manière à ce que le faisceau (R) s'échappant de la fibre optique (7) formant filtre de mode soit réfléchi par la paroi cylindrique, le barreau jouant en outre le rôle d'une lentille cylindrique focalisant le faisceau réfléchi sur l'organe optoélectronique de détection disposé sur ladite deuxième face plane ($p_1$).

5. Dispositif selon la revendication 1, caractérisé en ce que ledit segment de fibre optique (7) comportant un rétrécissement dans une zone de longueur déterminée (a), lesdits moyens sont formés par un manchon (94) en matériau transparent à la longueur d'onde émise d'indice de réfraction supérieur à celui du coeur (C) générant lesdites pertes directives et en ce que l'organe optoélectronique de détection (60) est formé par une photodiode comportant un canal central (602) enfilée sur le segment de fibre optique (7) de manière à capter le faisceau s'échappant de la fibre optique.

6. Dispositif selon l'une quelconque des revendications 1 à 5, caractérisé en ce que ladite fibre optique (7) étant à base de silice, le matériau d'indice de réfraction supérieur à celui du coeur (c) de la fibre optique (7) est du verre.

7. Dispositif selon l'une quelconque des revendications 1 à 5, caractérisé en ce que le matériau d'indice supérieur à celui du coeur (C) dudit segment de fibre optique (7) est à base de colle polymérisable lorsqu'elle est soumise à un rayonnement ultraviolet.

## Claims

1. An interfermometric device in the form of a ring, comprising: a ring of monomodal fiber light guide (5), means (10) for the emission of coherent light energy with a given wavelength (10), means (8) for the separation and mixing of the radiations in order to direct, simultaneously and in equal parts, the coherent light energy emitted towards one of the two ends of the ring (5) and to recombine the radiation emerging from the two ends (50 and 51) of the ring (5); and a segment of monomodal fiber light guide (7) comprising a core (C) and a sheath (G), forming a mode filter and placed between the separating and mixing means (8) and light energy emission means (10), characterized in that the said segment (7) of monomodal fiber is provided with rat race means (9) generating directive losses creating a beam escaping from the said segment of the fiber light guide (7) following a mean given direction of propagation and having a power equal to half the power of the radiation emerging from the two ends of the ring (5); and in that it comprises an optoelectronic device (60) for the detection of the said beam.

2. The device as claimed in claim 1, characterized in that the said rat race means (9) are constituted by a block with plane faces of material transparent at the wavelength emitted and with a refractive index greater than that of the core (C) of the said segment of fiber light guide forming a mode filter, and gripping the latter in such a manner that it presents a micro curve with a given radius (r), generating the said directive losses; and in that the optoelectronic means (60) for detection is placed on one of the plane faces of the block (90) in such a manner as to catch the energy escaping from the said segment of the fiber light guide (7).

3. The device as claimed in claim 1, characterized in that the said segment of the fiber light guide (7) is held in a support (9) and comprises a flat produced by polishing of a superficial zone of the sheath (G) in such a manner as to only leave a thickness of the sheath (G) with a given value (e), the support comprising a plane face on which the said flat is milled, and in that it comprises a block (91) of a material transparent at the wavelength emitted and with a refractive index greater than that of the core (C) of the said segment of the fiber light guide (7) comprising a first plane face adjoined to the said flat and a second plane face on which there is placed the said optoelectronic detecting device (60).

4. The device as claimed in claim 3, characterized in that the block 6 is a cylindrical bar (93) whose axis of symmetry (Δ) is inclined at a given angle (γ), determined in relation to the plane of the said flat in such a manner that the beam (R) escaping from the fiber light guide (7) forming a mode filter is reflected by the cylindrical wall, the bar furthermore acting as a cylindrical lens focussing the reflected beam at the detecting optoelectronic means placed on the said second plane face (p₁).

5. The device as claimed in claim 1, characterized in that, the said segment of fiber light guide (7) having a constriction in a zone of given length (a), the said means are formed by a sleeve (94) of material transparent to the wavelength emitted and with a refractive index greater than that of the core (C) generating the said directional losses and in that the optoelectronic detecting device (60) is formed by a photodiode comprising a central channel (602) arranged to have threaded through it the segment of fiber light guide (7) in such a manner as to catch the beam escaping from the optical fiber light guide.

6. The device as claimed in any one of the preceding claims 1 through 5, characterized in that the said fiber light guide (7) is of a silicon based material, the material with a refractive index greater than that of the core (c) of the fiber light guide (7) being glass.

7. The device as claimed in any one of the preceding claims 1 through 5, characterized in that the material with a refractive index greater than that of the core (C) of the said segment of the fiber light guide (7) is on the basis of a gum able to be polymerized when exposed to the action of ultraviolet radiation.

## Patentansprüche

1. Ring-Interferometervorrichtung mit: einem Ring aus einer optischen Monomode-Faser (5), Mitteln (10) zum Aussenden von kohärenter Lichtenergie einer bestimmten Wellenlänge, Mitteln (8) zum Spalten und Mischen der Strahlung, um die ausgesendete kohärente Lichtenergie gleichzeitig und in gleichen Anteilen den zwei Enden des Ringes (5) zuzuführen und die aus diesen beiden Enden (50, 51) des Ringes (5) austretende Strahlung zu rekombinieren; und einem Segment einer optischen Monomode-Faser (7), die eine Seele (C) und eine Hülle (G) aufweist, das ein Monomode-Filter bildet und zwischen den Mitteln (8) zum Spalten und Mischen sowie den Mitteln (10) zum Aussenden von Lichtenergie angeordnet ist, dadurch gekennzeichnet, daß dieses Monomode-Fasersegment (7) mit Abzweigungsmitteln (9) versehen ist, die Richtungsverluste bewirken, um ein Bündel zu erzeugen, welches aus dem optischen Fasersegment (7) in einer bestimmten mittleren Ausbreitungsrichtung austritt und eine Leistung aufweist, die gleich der Hälfte der Strahlungsleistung ist, welche aus den zwei Enden des Ringes (5) austritt; und daß sie ein optoelektronisches Element (60) zur Erfassung dieses Bündels aufweist.

2. Vorrichtung nach Anspruch 1, dadurch gekennzeichnet, daß die Abzweigungsmittel (9) durch einen Block mit ebenen Flächen aus einem Material gebildet sind, welches bei der Wellenlänge der ausgesendeten Welle transparent ist und dessen Brechungsindex größer als der der Seele (C) des optischen Fasersegments (7) ist, welches das Modenfilter bildet, und diese in solcher Weise einspannt, daß sie eine Mikrokrümmung von bestimmtem Radius (r) aufweist, um diese Richtungsverluste zu erzeugen; und daß das optoelektronische Erfassungselement (60) auf einer der ebenen Flächen des Blocks (90) in solcher Weise angeordnet ist, daß es die Energie auffängt, die aus dem optischen Fasersegment (7) austritt.

3. Vorrichtung nach Anspruch 1, dadurch gekennzeichnet, daß das optische Fasersegment (7) in einem Halter (9) gehalten ist und eine Abflachung aufweist, welche durch Polieren einer Oberflächenzone der Hülle (G) hergestellt ist, in solcher Weise, daß nur eine Dicke der Hülle (G) von vorbestimmtem Wert (e) verbleibt, wobei der Halter eine ebene Fläche aufweist, mit welcher diese Abflachung bündig ist, und daß sie einen Block (91) aus einem Material aufweist, welches bei der Wellenlänge der gesendeten Welle transparent ist und dessen Brechungsindex größer als der der Seele (C) des optischen Fasersegments (7) ist, mit einer ersten ebenen Fläche, welche an die Abflachung angelegt ist, und einer zweiten ebenen Fläche, auf welcher das optoelektronische Erfassungselement (60) angeordnet ist.

4. Vorrichtung nach Anspruch 3, dadurch gekennzeichnet, daß der Block (6) ein zylindrischer Stab (93) ist, dessen Symmetrieachse (Δ) um einen bestimmten Winkel (γ) in bezug auf die Ebene der Abflachung geneigt ist, so daß der aus der das Monomode-Filter bildenden optischen Faser (7) austretende Strahl (R) durch die zylindrische Wandung reflektiert wird, wobei dieser Stab ferner die Funktion einer zylindrischen Linse erfüllt, welche den reflektierten Strahl auf dem optoelektronischen Erfassungselement fokussiert, das auf der zweiten ebenen Fläche (p₁) angeordnet ist.

5. Vorrichtung nach Anspruch 1, dadurch gekennzeichnet, daß das optische Fasersegment (7) eine Verjüngung in einer Zone bestimmter Länge (a) aufweist und die genannten Mittel durch eine Hülse (94) aus einem Material gebildet sind, welches bei der Wellenlänge der gesendeten Welle transparent ist und dessen Brechungsindex größer als der der Seele (C) ist, wodurch die genannten Richtungsverluste erzeugt werden, und daß das optoelektronische Erfassungselement (60) durch eine Fotodiode gebildet ist, die einen zentralen Kanal (602) aufweist, der in solcher Weise über das optische Fasersegment (7) geschoben ist, daß er den aus der optischen Faser austretenden Strahl auffängt.

6. Vorrichtung nach einem der Ansprüche 1 bis 5, dadurch gekennzeichnet, daß die optische Faser (7) auf Siliziumoxid basiert und das Material aus einem Brechungsindex, der größer als der der Seele (C) der optischen Faser (7) ist, aus Glas besteht.

7. Vorrichtung nach einem der Ansprüche 1 bis 5, dadurch gekennzeichnet, daß das Material, dessen Brechungsindex größer als der der Seele (C) des optischen Fasersegments (7) ist, ein Material auf der Basis eines Klebers ist, der bei Bestrahlung mit Ultraviolettlicht polymerisiert.

# FIG_1

# FIG_2

# FIG_3

**FIG_4**

**FIG_5**

**FIG_6**

**FIG_7**

# FIG_8

Pertes (dB)

3dB

0     $n_{silice} = 1{,}46$     $n_{verre} = 1{,}52$    n

$e_1$

$e_2$

# FIG_9

R'

R

M

$\theta_n$     $\theta_n$

$\gamma$

G

C

91

## FIG_10

## FIG_11